(19) Europäisches Patentamt / European Patent Office / Office européen des brevets

(11) **EP 1 987 264 B1**

(12) # EUROPÄISCHE PATENTSCHRIFT

(45) Veröffentlichungstag und Bekanntmachung des Hinweises auf die Patenterteilung:
**08.08.2012   Patentblatt 2012/32**

(21) Anmeldenummer: **07721858.4**

(22) Anmeldetag: **25.01.2007**

(51) Int Cl.:
*F16D 48/06* *(2006.01)*

(86) Internationale Anmeldenummer:
**PCT/DE2007/000124**

(87) Internationale Veröffentlichungsnummer:
**WO 2007/093144 (23.08.2007 Gazette 2007/34)**

(54) **VERFAHREN UND VORRICHTUNG ZUM REFERENZIEREN DER STELLUNG EINES BETÄTIGUNGSGLIEDES**

METHOD AND DEVICE FOR REFERENCING THE POSITION OF AN ACTUATING ELEMENT

PROCEDE ET DISPOSITIF DE REPERAGE DE LA POSITION D'UN ORGANE D'ACTIONNEMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.02.2006   DE 102006007124**

(43) Veröffentlichungstag der Anmeldung:
**05.11.2008   Patentblatt 2008/45**

(73) Patentinhaber: **Schaeffler Technologies AG & Co. KG**
**91074 Herzogenaurach (DE)**

(72) Erfinder:
• **PANZER, Matthias**
**76137 Karlsruhe (DE)**
• **BAEHR, Markus**
**77855 Achern (DE)**
• **EICH, Jürgen**
**77815 Bühl (DE)**
• **RENFER, Alexander**
**77815 Bühl (DE)**
• **HIRT, Joachim**
**77704 Oberkirch (DE)**
• **WEBER, Thomas**
**76461 Muggensturm (DE)**

(56) Entgegenhaltungen:
**EP-A- 1 614 922        GB-A- 2 369 869**
**US-A1- 2002 035 015**

**Beschreibung**

Die Erfindung betrifft ein Verfahren und eine Vorrichtung zum Referenzieren der Stellung eines Betätigungsgliedes einer Funktionseinheit, insbesondere einer Kupplung im Antriebsstrang eines Fahrzeugs.

Bei der motorischen Betätigung von Funktionseinheiten mittels eines Betätigungsgliedes, wobei die Funktion der Funktionseinheit sich beispielsweise proportional zur Stellung des Betätigungsgliedes ändert, ist häufig eine Referenzierung der Stellung des Betätigungsgliedes erforderlich, damit in einer Steuereinheit die genaue Stellung des Betätigungsgliedes bekannt ist. Ein Beispiel dafür ist die motorische Betätigung einer Kupplung, bei der die Stellung eines Kupplungshebels das Drehmomentübertragungsvermögen der Kupplung bestimmt. Eine genaue Kenntnis des Drehübertragungsvermögens der Kupplung ist für eine genaue Steuerung bzw. Regelung des Anfahrens und von Schaltvorgängen wichtig.

Eine Referenzierung ist insbesondere dann unerlässlich, wenn beispielsweise als Aktor ein Elektromotor verwendet wird, der das Betätigungsglied über eine Welle antreibt, deren Drehstellung mit einem Inkrementalsensor erfasst wird. Mit dem Inkrementalsensor können keine Absolutstellungen des Betätigungsgliedes erfasst werden, sondern nur Stellungsänderungen, so dass es erforderlich ist, die Absolutstellung des Betätigungsgliedes bzw. die Drehstellung der Ausgangswelle des Elektromotors über eine Referenzierung zu ermitteln.

Ein Verfahren und eine Vorrichtung zum Referenzieren eines Inkrementalsensors in einer Betätigungsvorrichtung sind aus EP-A-1 614 922 bekannt.

Aus der DE 44 33 825 C2 ist eine Stelleinrichtung für eine Kraftfahrzeug-Reibungskupplung bekannt, bei der die Ausgangswelle eines Elektromotors ein Segmentzahnrad antreibt, an dem ein Betätigungsglied für die Kupplung gelagert ist. Der Verdrehbereich des Segmentzahnrades ist durch Anschläge begrenzt, die zum Referenzieren angefahren werden können. Auf diese Weise kann die Absolutstellung des Betätigungsgliedes ermittelt werden, von der aus der Verstellweg mittels eines Inkrementsensors erfasst werden kann.

Aus der DE 100 27 330 A1 ist eine Vorrichtung zum Schalten eines Getriebes bekannt, bei der ein Elektromotor, dessen Drehstellung mittels eines Inkrementsensors erfasst wird, ein Betätigungsglied des Getriebes antreibt, das in einer Endstellung gegen einen Anschlag bewegt werden kann. Das Betätigungsglied ist zusätzlich mit einer Oberflächenprofilierung versehen, in die ein federbelastetes Abtastbauteil eingreift. Die Profilierung des Betätigungsgliedes ist derart, dass die zum Verstellen des Betätigungselements erforderliche Kraft von der Relativstellung zwischen der Oberflächenprofilierung und dem Abtastbauteil abhängt. Die Steilheit von Formflächen der Profilierung kann derart sein, dass die durch elastische Vorspannung des Abtastbauteils auf das Betätigungsglied aufgebrachte Kraft in Teilbereichen größer ist als das Haltemoment des Elektromotors, so dass bei geringer Spannungsbeaufschlagung des Elektromotors ermittelt werden kann, ob sich das Betätigungsglied in einem vorbestimmten Stellbereich befindet.

Bei Referenzierungen, die mit Hilfe von Anschlägen erfolgen und dadurch erkannt werden, dass trotz vom Aktor auf das Betätigungsglied ausgeübter Kraft das Betätigungsglied sich nicht mehr bewegt, besteht die Gefahr, dass ein Blockieren in einer Übertragungsstrecke, in der sich das Betätigungsglied befindet, fehlerhaft als Referenzstellung erkannt wird. Dies kann, insbesondere bei der Betätigung von Kupplungen, zu gefährlichen Betriebszuständen führen, da das Fahrzeug dann beispielsweise unbeabsichtigt losfahren kann.

Der Erfindung liegt die Aufgabe zugrunde, die Sicherheit der Referenzierung der Stellung eines Betätigungsgliedes einer Funktionseinheit zu vergrößern.

Eine erste Lösung dieser Aufgabe wird mit einem Verfahren zum Referenzieren der Stellung eines Betätigungsgliedes einer Funktionseinheit, insbesondere einer Kupplung im Antriebsstrang eines Fahrzeugs, gelöst, bei welchem Verfahren das Erreichen einer Referenzstellung des Betätigungsgliedes dadurch plausibilisiert wird, dass überprüft wird, ob eine auf das Betätigungsglied aufbringbare Größe sich in einem vorbestimmten Abstand der Stellung des Betätigungsgliedes von der Referenzstellung in vorbestimmter Weise ändert.

Vorteilhaft ist die auf das Betätigungsglied aufbringbare Größe die zur Stellung des Betätigungsgliedes erforderliche Betätigungskraft.

Alternativ kann die auf das Betätigungsglied aufbringbare Größe die bei konstanter Betätigungskraft des Betätigungsgliedes vorhandene Geschwindigkeit des Betätigungsgliedes sein.

Bei einer Durchführungsform des erfindungsgemäßen Verfahrens, bei der die auf das Betätigungsglied aufbringbare Größe sich bei Erreichen einer Plausibilitätsstellung in vorbestimmter Weise ändert wird die Größe bei einer Bewegung des Betätigungsgliedes vor und/oder nach Erreichen der Plausibilitätsstellung ermittelt, werden die ermittelten Größen in gegenseitige Beziehung gesetzt und wird die Plausibilitätsstellung nur ausgewertet, wenn die gegenseitige Beziehung vorbestimmte Kriterien erfüllt. Bei der vorgenannten Durchführungsform des erfindungsgemäßen Verfahrens wird die Plausibilitätsstellung selbst plausibilisiert, so dass die Sicherheit der Referenzierung insgesamt vergrößert wird.

Eine weitere Lösung der Erfindungsaufgabe wird mit einer Vorrichtung zum Referenzieren der Stellung eines Betätigungsgliedes einer Funktionseinheit, insbesondere einer Kupplung im Antriebsstrang eines Fahrzeugs, erzielt, welche Vorrichtung einen Aktor zum Verstellen eines Betätigungsgliedes, einen eine Änderung der Stellung des Betätigungsgliedes enthält erfassenden Inkrementsensor, eine eine Referenzstellung des Betätigungsgliedes definierende Referenziereinrichtung, eine in vorbestimmten Abstand von der Referenzstellung befindliche Plausibilitätsstellung definierende Plausibilitätseinrichtung, eine Steuereinheit zum Steuern des Aktors, welche Steuereinheit eine Zähleinrichtung zum Zählen der vom Inkrementsensor erfassten Inkremente aufweist, eine Referenzstellungserfassungseinrichtung zum Erfassen der Referenzstellung des Betätigungsgliedes, eine Plausibilitätsstellungserfassungseinrichtung zum Erfassen der Plausibilitätsstellung des Betätigungsgliedes, einen Speicher zum Speichern von Zählständen des Inkrementsensors und einer Sollplausibilitätsanzahl der zwischen der Referenzstellung und der Plausibilitätsstellung liegenden Inkremente und eine Vergleichseinrichtung zum Vergleichen der Sollplausibilitätsanzahl mit einer Istplausibilitätszahl, die zusammen mit einer Referenzierung ermittelt wird, wobei eine Referenzierung nur dann als gültig gespeichert wird, wenn die Istplausibilitätszahl von der Sollplausibilitätszahl um weniger als einen vorbestimmten Wert abweicht.

Der Aktor kann beispielsweise ein Elektromotor sein.

Die Plausibilitätseinrichtung kann derart ausgebildet sein, dass sie die zum Verstellen des Betätigungsgliedes erforderliche, vom Aktor aufzubringende Kraft in der Plausibilitätsstellung in vorbestimmter Weise verändert.

Die Plausibilitätsstellungserfassungseinrichtung kann beispielsweise die Leistungsaufnahme des Aktors erfassen.

Die Steuereinheit der erfindungsgemäßen Vorrichtung kann derart ausgebildet sein, dass die Plausibilitätsstellung plausibilisiert wird, in dem eine für die Betätigung des Betätigungsgliedes maßgebliche Größe vor und/oder nach Erreichen der Plausibilitätsstellung bestimmt, die bestimmten Größen in gegenseitige Beziehung gesetzt und die Plausibilitätsstellung als plausibel gewertet wird, wenn eine vorbestimmte Beziehung festgestellt wird.

In einer bevorzugten Ausführungsform enthält die Plausibilitätseinrichtung ein durch eine Bewegungsbahn geführtes Abtastbauteil, welche Bewegungsbahn sich bei einer Verstellung des Betätigungsgliedes relativ zu dem Abtastbauteil bewegt, wobei sich die zur Bewegung der Bewegungsbahn relativ zu dem Bauteil erforderliche Kraft in der Plausibilitätsstellung des Betätigungsteils in vorbestimmter Weise ändert

Das Abtastbauteil ist vorteilhafterweise zu der Bewegungsbahn hin elastisch vorgespannt, wobei sich die elastische Vorspannkraft bei einer Bewegung der Bewegungsbahn relativ zu dem Abtastbauteil ändert.

Bei einer Ausführungsform der erfindungsgemäßen Vorrichtung betätigt der Aktor ein linear bewegliches Abtastglied, das bei seiner Bewegung längs einer an einem schwenkbaren Betätigungsglied ausgebildeten Formfläche das Betätigungsglied verschwenkt, wobei die Plausibilitätseinrichtung durch eine plötzliche Neigungsänderung der Formfläche gebildet ist.

Die Referenziereinrichtung kann beispielsweise durch einen Anschlag gebildet sein.

Bei einer anderen Ausführungsform ist die Referenziereinrichtung durch eine Referenzierstelle der Formfläche gebildet, in deren Anlage das Abtastglied bei sich selbsttätig Öffnen der Kupplung gelangt.

Die Erfindung, die überall dort mit Vorteil eingesetzt werden kann, wo ein Referenzieren der Stellung eines Betätigungsgliedes einer Funktionseinheit erforderlich ist, wird im Folgenden beispielhaft an einer motorischen Betätigungseinrichtung für eine Fahrzeugkupplung erläutert.

In den Figuren stellen dar:

Fig. 1         eine Aufsicht auf einen Teil einer Betätigungseinrichtung einer Kupplung,

Fig. 2 und 3   Beispiele für Bewegungsbahnen, die von einem Abtastbauteil abgetastet werden,

Fig. 4         ein Flussdiagramm zur Erläuterung einer Referenzierung,

Fig. 5         ein weiteres Ausführungsbeispiel einer Bewegungsbahn mit Abtastglied,

Fig. 6         einen Halbslängsschnitt durch eine Doppelkupplung,

Fig. 7         eine Ausschnittsdarstellung der Fig. 6 zur Erläuterung der Betätigungsvorrichtung, und

Fig. 8         eine Kraftwegkennlinie zur Erläuterung einer erfindungsgemäßen Referenzierung.

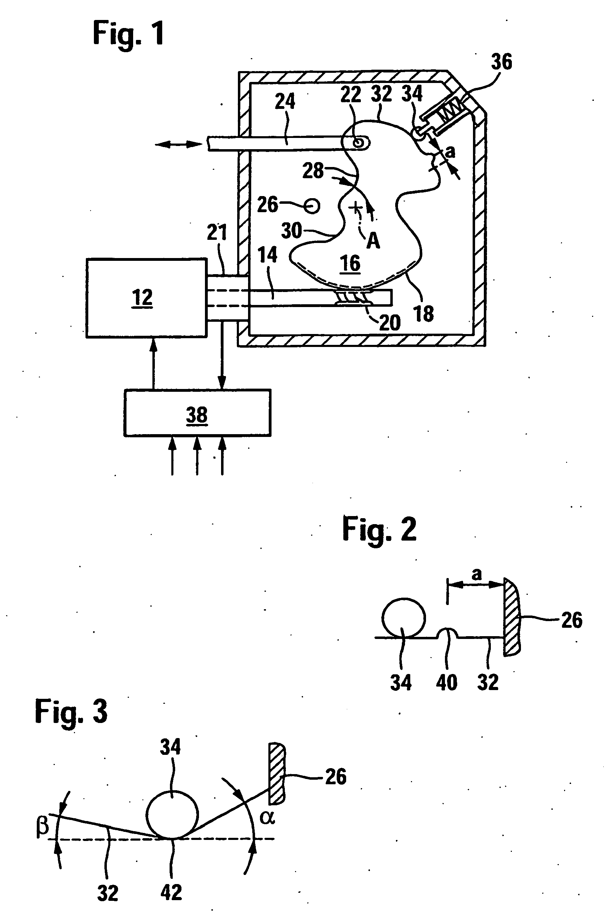

Gemäß Fig. 1 ist am Gehäuse 10 einer Kupplungsbetätigungseinheit ein Elektromotor 12 befestigt, dessen Ausgangswelle 14 ein am Gehäuse 10 um eine Achse A drehbar gelagertes Segmentrad 16 drehantreibt. Das Segmentrad 16 weist einen mit einer Verzahnung 18 ausgebildeten Umfangsbereich auf, der mit einer Schneckenverzahnung 20 der Ausgangswelle 14 kämmt. Die Drehstellung der Ausgangswelle 14 wird von einem Inkrementsensor 21 erfasst.

An dem Segmentrad 16 ist in einem Lager 22 eine Betätigungsstange 24 gelagert, deren Bewegung, die durch eine gelenkige Unterteilung (nicht dargestellt) der Betätigungsstange eine lineare Bewegung sein kann, auf einen nicht dargestellten Ausrückhebel einer in ihrem Aufbau an sich bekannten Kupplung übertragen wird. Die Betätigungsstange 24 kann direkt mit dem Kupplungshebel verbunden sein, oder beispielsweise über eine hydraulische Übertragungsstrecke mit dem Kupplungshebel verbunden sein. Die Drehbarkeit des Segmentrades 16 um die Achse A ist durch einen gehäusefesten Anschlag 26 begrenzt, der in der einen oder der anderen Endlage mit Anschlagflächen 28 bzw. 30 des Segmentrades 16 in Berührung kommt. An seinem Außenumfang weist das Segmentrad 16 eine Profilierung auf, die eine Bewegungsbahn 32 für eine Abtastrolle 34 bildet, die in einem Gehäuseansatz linear beweglich geführt ist und von einer Feder 36 gegen die Bewegungsbahn 32 elastisch vorgespannt ist.

Zur Steuerung des Elektromotors 12 dient eine elektronische Steuereinheit 38, die einen Mikroprozessor mit zugehörigen Speichereinrichtungen enthält und einen mit dem Inkrementsensor 21 verbundenen Eingang sowie weitere Eingänge aufweist, denen für den Betrieb der Kupplung relevante Eingangsgrößen, wie Stellung eines Fahrpedals, Fahrzeuggeschwindigkeit, Gangposition eines Getriebes usw. zugeführt werden. Ein Ausgang der Steuereinheit 38 ist mit dem Elektromotor 12 verbunden und steuert dessen Betrieb.

Die Figuren 2 und 3 zeigen zwei schematische Darstellungen der Kontur der Bewegungsbahn 32. Bei der Ausführungsform gemäß Fig. 2 weist die Bewegungsbahn 32 einen konstanten radialen Abstand von der Drehachse A des Segmentrades 16 auf, ist jedoch mit einer Nase bzw. einem Vorsprung 40 versehen, der in vorbestimmtem Abstand a vor der Stelle angeordnet ist, an der die Anlagefläche 28 des Segmentrades 16 in Anlage an den Anschlag 26 kommt. Bei der Ausführungsform gemäß Fig. 3 weist die Bewegungsbahn 32 eine tiefste Stelle 42 auf, an der der Abstand der Bewegungsbahn 32 von der Achse A minimal ist. Beidseitig der tiefsten Stelle 40 weist die Bewegungsbahn 32 eine Steigung auf, wobei die Steigung in Richtung zum Anschlag 26 einen Winkel $\alpha$ hat, der größer ist als der Winkel $\beta$ der gegenüberliegenden Steigung.

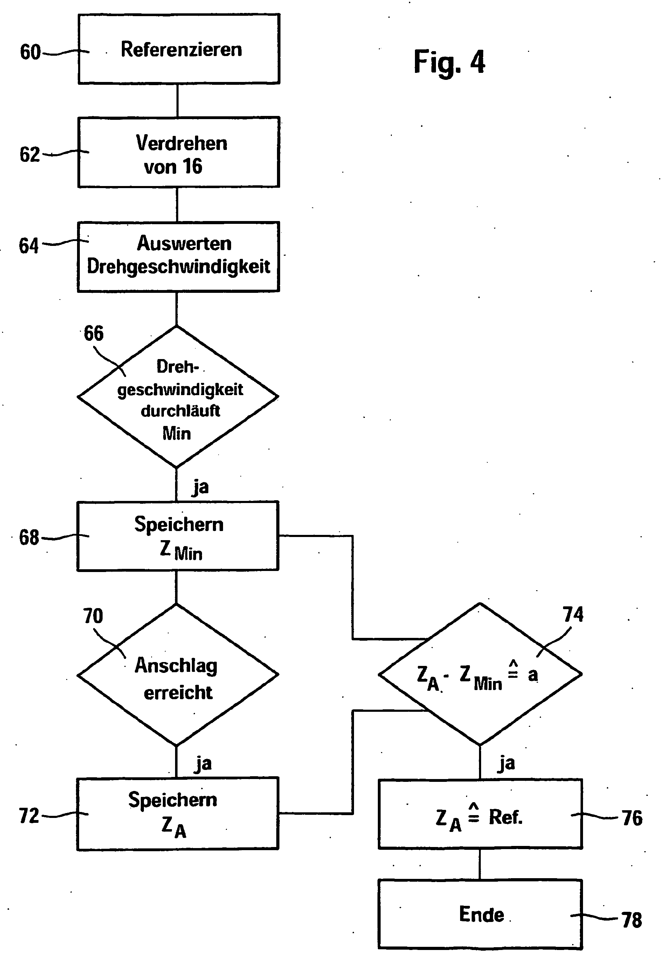

Im Folgenden wird die Funktionsweise der Vorrichtung anhand des Flussbildes gemäß Fig. 4 erläutert:

Sei angenommen, im Schritt 60 wird in der Steuereinheit 38 ein Programm aktiviert, bei dem ein Referenzieren der Stellung der Betätigungsstange 24 bzw. des damit geometrisch gekoppelten nicht dargestellten Kupplungshebels durchgeführt wird. Im Schritt 62 wird das Segmentrad 16 in Gegenuhrzeigerrichtung verdreht, wobei der Elektromotor 12 beispielsweise mit konstanter Leistung angetrieben wird, so dass sich das Segmentrad 16 mit von der Gegenkraft der Kupplung abhängiger Drehgeschwindigkeit dreht. Im Schritt 64 wird die Drehgeschwindigkeit ausgewertet und im Schritt 66 wird ausgewertet, ob die Drehgeschwindigkeit ein Minimum durchläuft, was der Fall ist, wenn die Abtastrolle 34 über den Vorsprung 40 läuft. Wenn im Schritt 66 das Vorliegen eines Minimums festgelegt wird, wird der Zählstand gespeichert, der ein die Inkremente des Inkrementsensors 21 zählender Zähler in der Steuereinheit 38 bei Durchlaufen des Minimums hat. Die Drehung des Segmentrades 16 hält an, bis im Schritt 70 festgestellt wird, dass sich das Segmentrad 16 trotz der vom Elektromotor 12 her wirkenden Kraft nicht weiterdreht, so dass der Anschlag 26 erreicht ist. Im Schritt 72 wird der Zählstand $Z_A$ des Zählers gespeichert, den dieser bei Erreichen des Anschlags hat. Im Schritt 74 wird überprüft, ob die Differenz zwischen dem Zählstand $Z_A$ und dem Zählstand $Z_{Min}$ dem Abstand a entspricht. Ist dies der Fall, so wird im Schritt 76 die Referenzierung als plausibel bzw. gültig gewertet und der Zählstand $Z_A$ als der Referenzstellung entsprechend gewertet. Wenn die Differenz zwischen $Z_A$ und $Z_{Min}$ nicht dem Abstand a entspricht, wird die Referenzierung als nicht plausibel bzw. fehlerhaft gewertet und es kann beispielsweise eine entsprechende Anzeige erfolgen. Die der Erfassung der Anschlagstellung dienenden Bauteile bzw. Funktionsumfänge bilden somit eine Referenzstellungserfassungseinrichtung. Die der Erfassung der dem Vorsprung 40 überlaufenden Stellung der Abtastrolle 34 dienenden Bauteile bzw. Funktionsumfänge bilden eine Plausibilitätsstellungserfassungseinrichtung. Die Anzahl der Inkremente zwischen der Plausibilitätsstellung und der Anschlagstellung ist eine Soll- bzw. Ist-Plausibilitätsanzahl.

Der Abstand a, den der Vorsprung 40 von der Anschlagsposition hat, kann durch Fertigungstoleranzen unterschiedlich sein, so dass es vorteilhaft ist, dass dieser Abstand a von dem System nach Montage der Kupplungsbetätigung, beispielsweise am Bandende in einem Fahrzeugherstellerwerk eingelernt wird.

Bei der Ausbildung der Bewegungsbahn gemäß Fig. 3 erfolgt die Plausibilitätsüberprüfung in ähnlicher Weise. Dabei nimmt bei konstanter Leistungsbeaufschlagung des Elektromotors 12 die Drehzahl der Ausgangswelle 14 plötzlich zu, wenn die Abtastrolle 34 die tiefste Stelle 42 durchläuft und sich dann längs der steileren Rampe weiter bewegt. Es versteht sich, dass das Segmentrad 16 den Anschlag 26 erreicht, bevor das Ende der steileren Rampe erreicht ist. Der Abstand zwischen der tiefsten Stelle 42 und dem Erreichen des Anschlags 26 ist wiederum vorbekannt. Die Bewegung der Abtastrolle 34 längs der steileren Rampe kann auch erkannt werden, indem der Elektromotor 12 mit konstanter Drehzahl betrieben wird und die Leistungsaufnahme des Elektromotors 12 gemessen wird. Diese Leistungsaufnahme liegt während des Ablaufens der Abtastrolle 34 auf der steileren Rampe innerhalb eines vorbestimmten Bereiches, der zwischen der Leistung liegt, die zur Verstellung erforderlich ist, wenn das Segmentrad 16 auf einer mit konstantem Radius ausgebildeten Strecke der Bewegungsbahn 32 abläuft, und dem Wert, den die Leistung bzw. Spannung des Elektromotors 12 annimmt, wenn der Anschlag erreicht ist. Ähnlich kann die Leistung des Elektromotors beim Ablaufen auf der flachen Rampe in Richtung auf den Anschlag 26 erfasst werden, die geringer ist als die vom Elektromotor aufgenommene Leistung, während die Abtastrolle auf einem mit konstantem Radius ausgebildeten Bereich der Bewegungsbahn 32 abläuft.

Auch bei der Ausführungsform gemäß Fig. 2 kann der Elektromotor mit geregelter konstanter Drehzahl betrieben werden und seine Leistungsaufnahme beim Überfahren des Vorsprungs 40 ermittelt werden.

Der Abstand zwischen der tiefsten Stelle 42 und dem Anschlag ist auch bei der Ausführungsform gemäß Fig. 3 vorbekannt und wird vorteilhafterweise erst nach Zusammenbau der Betätigungsvorrichtung gelemt.

Die Erfindung kann in unterschiedlichster Weise abgeändert werden. Beispielsweise kann die Bewegungsbahn bzw. eine Formfläche an der Betätigungsstange 24 oder einem anderen in der Bewegungsübertragung zwischen Elektromotor und Kupplung enthaltenen Bauteil angebracht sein. Alternativ kann die Abtastrolle bzw. das Abtastglied an einem vom Elektromotor bewegten Bauteil angebracht sein und eine gehäusefeste Bewegungsbahn abtasten. Zur Erkennung einer spezifischen Stelle der Bewegungsbahn, die in einem vorbestimmten Abstand von einer anderen spezifischen Stelle, beispielsweise einem Anschlag, angeordnet ist, bestehen unterschiedlichste Möglichkeiten insbesondere der geometrischen Gestaltung. Anstelle der Anschlagstellung selbst kann auch die spezifische Stellung auf der Bewegungsbahn, beispielsweise die tiefste Stelle 42 der Fig. 3, als Referenzstellung verwendet werden, die dann dadurch plausibilisiert wird, dass der Anschlag 26 oder eine andere spezifische Stelle der Bewegungsbahn in vorbestimmtem Abstand von der vorgenannten spezifischen Stelle erkannt wird.

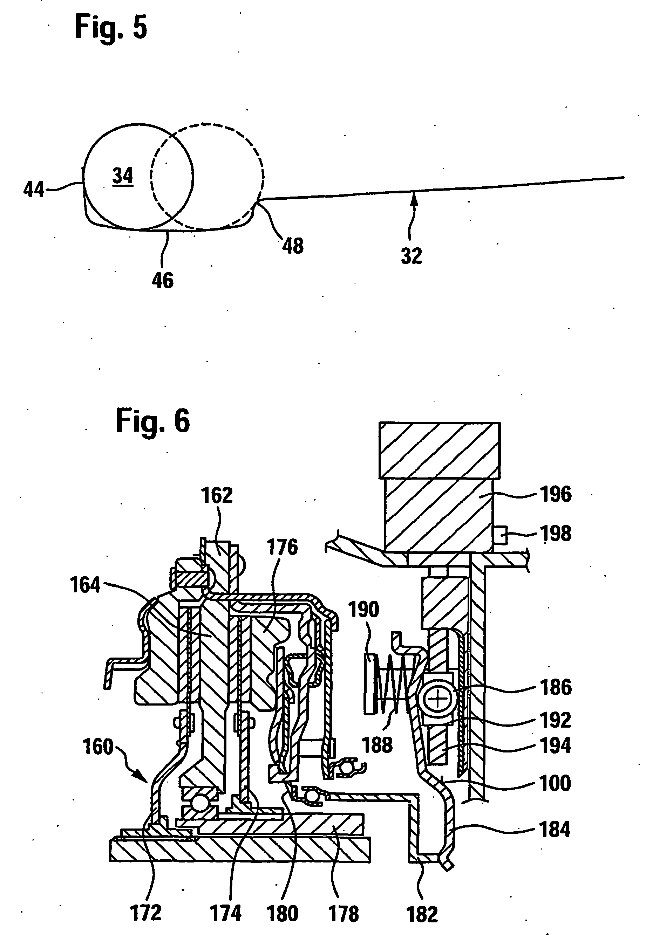

Fig. 5 zeigt eine weitere abgeänderte Ausführungsform einer erfindungsgemäßen Vorrichtung. Mit dem Bezugszeichen 32 ist wiederum eine Laufbahn bezeichnet, auf der sich eine Abtastrolle 34 abstützt. Die Laufbahn 32 weist einen Anschlag 44 auf, der die Relativbewegbarkeit zwischen der Abtastrolle 34 und der Bewegungsbahn 32 in Richtung Kupplung Auf begrenzt. Ein am entgegengesetzten Ende der Bewegungsbahn 32 vorgesehener Anschlag zur Begrenzung der Relativbewegung zwischen der Abtastrolle 34 und der Bewegungsbahn 32 in Richtung Kupplung geschlossen ist nicht dargestellt.

In dem Bereich vor dem Anschlag 44 weist die Bewegungsbahn 32 eine Mulde 46 auf, die über eine steile Erhebung bzw. Kante 48 in die weitere Bewegungsbahn übergeht. Die Abtastrolle 34 kann unmittelbar an einem Kupplungshebel oder an einem Bauteil zwischen dem Kupplungsaktor und dem Kupplungshebel angeordnet sein.

Die Stellung der Abtastrolle 34 am Anschlag 44 kann durch eine kleine Verfahrbewegung der Kupplung in Richtung Schließen plausibilisiert werden, bei der die Abtastrolle 34 in Anlage an die Kante 48 kommt (gestrichelt eingezeichnet). Diese Stellung der Abtastrolle 34 kann bei konstanter Spannungsbeaufschlagung des Aktors durch eine plötzliche Geschwindigkeitsabnahme oder bei Regelung des Aktors auf konstante Betätigungsgeschwindigkeit durch eine plötzliche Stromzunahme bzw. Zunahme der Leistungsaufnahme des Aktors detektiert werden. Bei dieser Art der Plausibilisierung genügt somit eine geringfügige Bewegung der Kupplung aus der vermuteten Referenzstellung heraus in eine Stellung, bei der ein zwar signifikanter aber sicher überwindbarer Widerstand auftritt, um die Referenzstellung sicher zu plausibilisieren. Es versteht sich, dass die Plausibilisierung auch erfolgen kann, indem vor dem Erreichen des Anschlags 44 die plötzliche Verminderung der Betätigungskraft der Kupplung sensiert wird, dabei ein Flag gesetzt wird und überprüft wird, ob der Anschlag 44 innerhalb des vorbestimmten weiteren Betätigungsweges (Breite der Mulde 46) erreicht wird.

Da die Plausibilisierung der Referenzstellung, die in ähnlicher Weise auch für die Referenzstellung Kupplung Geschlossen durchführbar ist, nur mit geringen Betätigungswegen verbunden ist, kann sie problemlos erfolgen, wenn beispielsweise die Startposition aufgrund eines Steuergeräteresets oder Fehlers verloren geht oder der Aktor aufgrund eines mechanischen Defekts an einer unerwarteten Position blockiert oder auf einen Anschlag trifft.

Fig. 6 zeigt einen Halblängsschnitt durch eine an sich bekannte Doppelkupplung 160, deren Gehäuse 162 drehfest mit einer nicht dargestellten Kurbelwelle einer Brennkraftmaschine verbunden ist. Linksseitig einer Grundplatte 164 des Gehäuses 162 ist eine erste Kupplungsscheibe 172 einer ersten Kupplung K1 angeordnet und rechtseitig der Grundplatte 164 befindet sich eine Kupplungsscheibe 174 einer zweiten Kupplung K2.

Im Folgenden wird nur die Betätigung der rechtsseitigen Kupplungsscheibe 174 erläutert. Die Betätigung der linksseitigen Kupplungsscheibe 172 erfolgt in entsprechender Weise über eine weitere Betätigungseinrichtung.

Die Kupplungsscheibe 174 ist mit Hilfe einer Andrückplatte 176 in reibschlüssige Anlage an die Grundplatte 164 drückbar, so dass von dem Gehäuse 162 über die Kupplungsscheibe 174 Drehmoment auf eine zweite Eingangswelle 178 des Doppelkupplungsgetriebes übertragbar ist. Zur axialen Verschiebung der Andrückplatte 176 dient ein tellerfederartig ausgebildeter Kupplungshebel 180, der sich zwischen dem Gehäuse 162 und der Andrückplatte 176 abstützt und derart geformt ist, dass er die Kupplung selbsttätig in die Offenstellung bewegt.

Zum Bewegen des Kupplungshebels 180 derart, dass die Andrückplatte 176 die Kupplungsscheibe 174 gegen die Grundplatte 164 drängt, ist ein Übertragungsglied 182 vorgesehen, das sich an einer Seite über ein Lager an dem Kupplungshebel 180 abstützt und an seinem anderen Ende in Anlage an einem Betätigungshebel 184 ist.

Der Betätigungshebel 184 liegt an einer Rolle 186 an, gegen die er von einer Feder 188 angepresst wird, die sich an einem maschinenfesten Anschlag 190 abstützt

Die Rolle 186 ist an einer Spindelmutter 192 gelagert, die im Gewindeeingriff mit einer Spindel 194 ist, die von einem Elektromotor 196 drehangetrieben wird. Zur Erfassung der Drehstellung eines sich bei Betätigung des Elektromotors 196 drehenden Bauteils ist ein Inkrementsensor 198 vorgesehen, der mit einem Eingang einer nicht dargestellten elektronischen Steuereinrichtung verbunden ist.

Zum Betätigen des Kupplungshebels 180 dreht der Elektromotor 196 die Spindel 194, längs der sich dadurch die Spindelmutter 192 linear bewegt, wodurch sich die Rolle 186 längs einer Formfläche des Betätigungshebels 184 bewegt und diesen entsprechend der Neigung, die die Formfläche 100 relativ zur Bewegungsrichtung der Rolle 186 hat, verschwenkt.

Die gesamte Anordnung ist derart, dass der tellerfederartig ausgebildete Kupplungshebel 180 aus einer geschlossenen Stellung der Kupplung in Folge seiner Eigenkraft das Übertragungsglied 182 nach rechts bewegt, wobei bei einer Verschwenkung des Betätigungshebels 184 entgegen der Uhrzeigerrichtung das Leerlaufmoment des Elektromotors 196 überdrückt wird und sich die Rolle 186 unter Drehung der Spindel 194 aufwärts bewegt. Die Kupplung wird somit von dem Elektromotor in ihre Schließstellung gedrückt und bewegt sich beim Abschalten des Elektromotors selbsttätig in ihre Offenstellung.

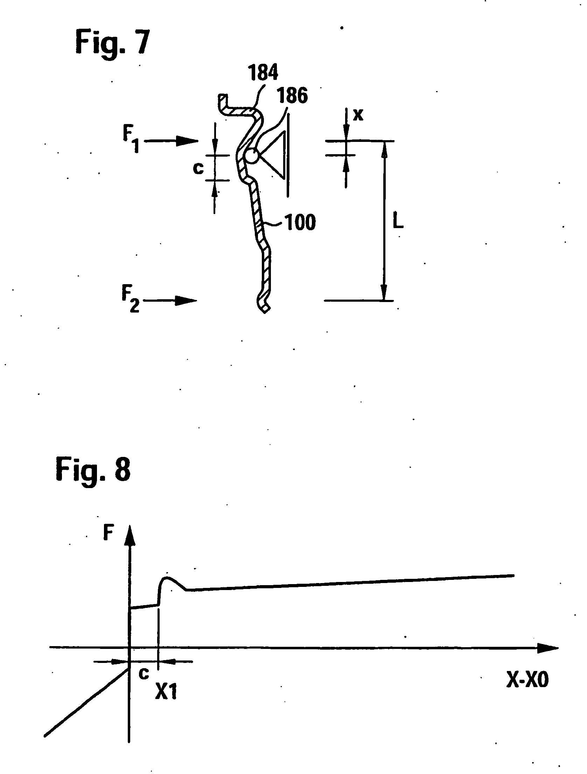

Fig. 7 verdeutlicht die Kraftverhältnisse am Betätigungshebel 184, dessen Form von der des in Fig. 6 dargestellten Hebels leicht abweicht.

$F_1$ bezeichnet die Kraft, die von der Feder 188 auf den Betätigungshebel 184 ausgeübt wird. $F_2$ bezeichnet die vom Übertragungsglied 182 her auf den Betätigungshebel 184 wirkende Kraft. L ist der Abstand zwischen den Wirklinien der Kräfte. X ist der Abstand des Berührpunktes zwischen der Rolle 186 und dem Betätigungshebel 184 von der Wirklinie der Kraft $F_1$.

Es gilt die Beziehung:

$$F_2 \times (L-X) = F_1 \times X$$

Im stromlosen Zustand des Elektromotors 196 stellt sich das System unter Wirkung der Kraft des Kupplungshebels 180 in die in Fig. 7 dargestellte Stellung.

Fig. 8 ergibt die von dem Elektromotor 196 auf die Spindelmutter 192 bzw. die Rolle 186 aufzubringende Kraft in Abhängigkeit von (X - X0) an, wobei X0 die in Fig. 7 dargestellte Stellung ist, in die sich die Kupplung in Offenstellung bewegt. Diese Stellung ist dadurch gekennzeichnet, dass sich die Neigung der Formfläche 100 relativ zur Bewegungsrichtung umkehrt. Nach oben in Fig. 7, d.h. über die Offenstellung der Kupplung hinaus wird der Neigungswinkel verhältnismäßig groß, sodass die negative Kraft zum Überdrücken der Offenstellung stark ansteigt. Ausgehend von der Offenstellung X0 (in Fig. 7 dargestellt) ist die Formfläche 100 relativ zur Bewegungsrichtung der Rolle 186 zunächst über eine Strecke c nur wenig geneigt, um dann in eine steile Stufe in einen ähnlich geneigten Abschnitt überzugehen.

Fig. 8 zeigt die Kraftverhältnisse:

Bei X = X0 kehrt die Kraft F ihr Vorzeichen um. Zum Schließen der Kupplung ist zunächst eine mit zunehmendem X leicht zunehmende Kraft erforderlich, die, nachdem die Strecke c überwunden ist und bei X1 die Stufe erreicht wird, plötzlich zunehmend, um dann wieder entsprechend der Steigung schwächer zuzunehmen. Je nach Ausbildung der Stufe an der Stelle X1 kann der Kraftverlauf F beim Überwinden der Stufe mehr oder weniger weit überhöht sein.

Im Folgenden wird erläutert, wie die stufenförmige Ausbildung der Formfläche 100 für eine sichere Plausibilisierung der Referenzierung verwendet werden kann:

Das System geht bei stromlosem Aktor 196 selbsttätig in die Stellung gemäß Fig. 7, in der die Rolle 186 den Abstand X0 von der Wirklinie der Kraft $F_1$ hat. Wenn die Kupplung zum Absichern bzw. Plausibilisieren der Referenzierung dann mittels des Elektromotors 186 in Richtung Schließen bewegt wird, hat die Kraft den Verlauf gemäß Fig. 8, d.h. nimmt von einem Anfangswert während der Bewegung der Rolle 186 längs der Strecke c zunächst von einem Anfangswert aus nur wenig zu, um dann sprunghaft zuzunehmen. Diese sprunghafte Zunahme und die zugehörige Auslenkung der Rolle 186 bzw. die Strecke c werden beispielsweise durch Messung der Leistungsaufnahme des Elektromotors oder, wenn dieser mit konstanter Leistung betrieben wird, durch Messung der Drehzahl des Elektromotors und der Strecke c (mit Hilfe des Inkrementsensors 198) gemessen. Wenn die Strecke c innerhalb eines plausiblen Bereiches liegt, wird die Referenzierung als einwandfrei gewertet.

Das Erreichen der Plausibilitätsstellung X1 kann weiter dadurch gesichert werden, dass überprüft wird, ob die Kraft-Weg-Kurve der Fig. 8 tatsächlich den vorbestimmten Verlauf hat. Dies kann beispielsweise wie folgt geschehen:

Während der vom Elektromotor 196 mit konstanter geregelter Drehzahl bzw. Geschwindigkeit angetriebenen Spindelmutter 192 wird der (gefilterte) Maximalwert der vom Elektromotor benötigten Spannung ($U_{max}$) gespeichert. Dazu wird die jeweils (gefilterte) Stellung $XU_{max}$ gespeichert, bei der diese maximale Motorspannung auftritt.

Bei einer vorgegebenen Stellung etwas vor Erreichen der Stufe bzw. der Stelle X1 wird der aktuelle Spannungsmaximalwert ($U_{zw}$) gespeichert.

Nachdem die Spindelmutter 192 genügend weit über die Stufe X1 hinausbewegt wurde, d.h. die im System vorgesehene Plausibilitätsstellung sicher überfahren ist, wird das Verhältnis zwischen den beiden gemerkten Spannungswerten ($U_{max}/U_{zw}$) gebildet, wobei der Wert von $U_{max}$ den in Fig. 8 eingezeichneten Scheitelwert der Kraft F entspricht. In der elektronischen Steuereinrichtung ist ein Sollwert für $U_{nm}/U_{zw}$ gespeichert. Das Erreichen der Plausibilitätsstellung X1 wird nur dann als einwandfrei gewertet, wenn der gemessene Verhältnis-wert $U_{max}/U_{zw}$ um weniger als einen vorbestimmten Wert von dem gespeicherten Sollwert abweicht.

Die Plausibilisierung der Plausibilitätsstellung X1, deren Erfolg für eine i.O.-Bewertung der Referenzierung Voraussetzung ist, kann auch auf andere Weise durchgeführt werden:

- Anstelle des Verhältnisses zwischen den beiden Spannungen kann auch die Spannungsdifferenz betrachtet werden. Der Vorteil davon ist, dass dieses Signal weitgehend unabhängig von der Basislast ist.

- Da der Kraft-Weg-Verlauf vorgegeben ist, kann auch der Spannungsgradient ausgewertet werden, der sich beim Überfahren der Stufe einstellt.

- Anstelle der Auswertung der an dem Elektromotor liegenden Spannung kann auch der Strom durch den Elektromotor erfasst werden. Von Vorteil hierbei ist, dass der nur ungenau bekannte elektrische Widerstand im Motorkreis dann weitgehend ohne Einfluss ist.

Auch bei der Stromauswertung kann das Verhältnis, die Differenz oder der Gradient der gemessenen Ströme bzw. des gemessenen Stromverlaufes ausgewertet werden.

In einer abgeänderten Ausführungsform kann der Betätigungshebel 184 gemäß Fig. 7 oberhalb der Stellung X0 der Rolle etwa waagerecht abgebogen sein, so dass er einen Anschlag bildet.

**Bezugszeichenliste**

| 10 | Gehäuse |
| 12 | Elektromotor |
| 14 | Ausgangswelle |
| 16 | Segmentrad |
| 18 | Verzahnung |
| 20 | Schneckenverzahung |
| 21 | Inkrementsensor |
| 22 | Lager |
| 24 | Betätigungsstange |
| 26 | Anschlag |
| 28 | Anschlagfläche |
| 30 | Anschlagfläche |
| 32 | Bewegungsbahn |
| 34 | Abtastrolle |
| 36 | Feder |
| 38 | Steuereinheit |
| 40 | Vorsprung |
| 42 | tiefste Stelle |
| 44 | Anschlag, "Kupplung auf" |
| 46 | Mulde |
| 48 | Kante |

| 60 | Referenzieren |
| 62 | Verdrehen |
| 64 | Auswerten |
| 66 | Auswerten Drehgeschwindigkeit |
| 68 | Speichern |
| 70 | Anschlag erreicht |
| 72 | Zählstand speichern |
| 74 | Abstand überprüfen |
| 76 | Referenzierung |
| 100 | Formfläche |
| 160 | Doppelkupplung |
| 162 | Gehäuse |
| 164 | Grundplatte |
| 172 | linke Kupplungsscheibe |
| 174 | Kupplungsscheibe |
| 176 | Andrückplatte |
| 178 | Eingangswelle |
| 180 | Kupplungshebel |
| 182 | Übertragungsglied |
| 184 | Betätigungshebel |
| 186 | Rolle |
| 188 | Feder |
| 190 | Anschlag |
| 192 | Spindelmutter |
| 194 | Spindel |
| 196 | Elektromotor |
| 198 | Inkrementsensor |

| A | Achse |
| a | Abstand |
| $\alpha$ | Winkel |
| $\beta$ | Winkel |
| $Z_a$ | Zählstand |
| $Z_{MIN}$ | Zählstand |
| K1 | erste Kupplung |
| K2 | zweite Kupplung |

**Patentansprüche**

1. Verfahren zum Referenzieren der Stellung eines Be-tätigungsgliedes einer Funktionseinheit, insbeson-dere einer Kupplung im Antriebsstrang eines Fahrzeugs, bei welchem Verfahren das Erreichen einer Referenzstellung des Betätigungsgliedes dadurch plausibilisiert wird, dass überprüft wird, ob eine auf das Betätigungsglied aufbringbare Größe sich in einem vorbestimmten Abstand der Stellung des Betätigungsgliedes von der Referenzstellung in vorbestimmter Weise ändert.

2. Verfahren nach Anspruch 1, wobei die auf das Betätigungsglied aufbringbare Größe die zur Verstel-lung des Betätigungsgliedes erforderliche Betäti-gungskraft ist.

3. Verfahren nach Anspruch 1, wobei die auf das Betätigungsglied aufbringbare Größe die bei konstanter Betätigungskraft des Betätigungsgliedes vorhandene Geschwindigkeit des Betätigungsgliedes ist.

4. Verfahren nach einem der Ansprüche 1 bis 3, wobei die auf das Betätigungsglied aufbringbare Größe sich bei Erreichen einer Plausibilitätsstellung in vorbestimmter Weise ändert und die Größe bei einer Bewegung des Betätigungsglieds vor und/oder nach Erreichen der Plausibilitätsstellung ermittelt wird, die ermittelten Größen in gegenseitige Beziehung gesetzt werden und die Plausibilitätsstellung nur ausgewertet wird, wenn die gegenseitige Beziehung vorbestimmte Kriterien erfüllt.

5. Vorrichtung zum Referenzieren der Stellung eines Betätigungsgliedes einer Funktionseinheit, insbesondere einer Kupplung im Antriebsstrang eines Fahrzeugs, enthaltend
einen Aktor (12; 196) zum Verstellen eines Betätigungsgliedes (24; 184),
einen eine Änderung der Stellung des Betätigungsgliedes erfassenden Inkrementsensor (21; 198),
eine eine Referenzstellung des Betätigungsgliedes definierende Referenziereinrichtung (26; 100),
eine in vorbestimmten Abstand von der Referenzstellung befindliche Plausibilitätsstellung definierende Plausibilitätseinrichtung (40; 42; 100),
eine Steuereinheit (38) zum Steuern des Aktors (12; 196), welche Steuereinheit aufweist,
eine Zähleinrichtung zum Zählen der vom Inkrementsensor (21; 198) erfassten Inkremente,
eine Referenzstellungserfassungseinrichtung zum Erfassen der Referenzstellung des Betätigungsgliedes,
eine Plausibilitätsstellungserfassungseinrichtung zum Erfassen der Plausibilitätsstellung des Betätigungsgliedes,
einen Speicher zum Speichern von Zählständen des Inkrementsensors und einer Sollplausibilitätsanzahl der zwischen der Referenzstellung und der Plausibilitätsstellung liegenden Inkremente und
eine Vergleichseinrichtung zum Vergleichen der Sollplausibilitätsanzahl mit einer Istplausibilitätszahl, die zusammen mit einer Referenzierung ermittelt wird, wobei eine Referenzierung nur dann als gültig gespeichert wird, wenn die Istplausibilitätszahl von der Sollplausibilitätszahl um weniger als ein vorbestimmter Wert abweicht.

6. Vorrichtung nach Anspruch 5, wobei der Aktor ein Elektromotor (12) ist.

7. Vorrichtung nach Anspruch 5 oder 6, wobei die Plausibilitätseinrichtung derart ausgebildet ist, dass sie die zum Verstellen des Betätigungsgliedes (24) erforderliche, vom Aktor (12) aufzubringende Kraft in der Plausibilitätsstellung in vorbestimmter Weise verändert.

8. Vorrichtung nach einem der Ansprüche 5 bis 7, wobei die Plausibilitätsstellungserfassungseinrichtung die Leistungsaufnahme des Aktors (12) erfasst.

9. Vorrichtung nach einem der Ansprüche 5 bis 8, wobei die Steuereinheit (38) derart ausgebildet ist, dass die Plausibilitätsstellung plausibilisiert wird, indem eine für die Betätigung des Betätigungsgliedes (184) maßgebliche Größe vor und/oder nach Erreichen der Plausibilitätsstellung bestimmt, die bestimmten Größen in gegenseitige Beziehung gesetzt und die Plausibilitätsstellung als plausibel gewertet wird, wenn eine vorbestimmte Beziehung festgestellt wird.

10. Vorrichtung nach einem der Ansprüche 5 bis 9, wobei die Plausibilitätseinrichtung ein durch eine Bewegungsbahn (32) geführtes Abtastbauteil (34) enthält, welche Bewegungsbahn sich bei einer Verstellung des Betätigungsgliedes (24) relativ zu dem Abtastbauteil bewegt, wobei sich die zur Bewegung der Bewegungsbahn relativ zu dem Abtastbauteil erforderliche Kraft in der Plausibilitätsstellung des Betätigungsteils in vorbestimmter Weise ändert.

11. Vorrichtung nach Anspruch 10, wobei das Abtastbauteil (34) zu der Bewegungsbahn (32) hin elastisch vorgespannt ist und sich die elastische Vorspannkraft bei einer Bewegung der Bewegungsbahn relativ zu dem Abtastbauteil ändert.

12. Vorrichtung nach einem der Ansprüche 5 bis 9, wobei der Aktor (196) ein linear bewegliches Abtastglied (186) betätigt, das bei seiner Bewegung längs einer an einem schwenkbaren Betätigungsglied (184) ausgebildeter Formfläche (100) das Betätigungsglied verschwenkt, wobei die Plausibiliereinrichtung durch eine plötzliche Neigungsänderung der Formfläche gebildet ist.

13. Vorrichtung nach einem der Ansprüche 5 bis 12, wobei die Referenziereinrichtung durch einen Anschlag (26) gebildet ist.

14. Vorrichtung nach Anspruch 12, wobei die Referenziereinrichtung durch eine Referenzierstelle der Formfläche (100) gebildet ist, in deren Anlage das Abtastglied bei sich selbsttätig öffnender Kupplung gelangt.

**Claims**

1. Method for referencing the position of an operating element of a functional unit, in particular a clutch in the drive train of a vehicle, in which method the plausibility of a reference position of the operating element being reached is checked by a check being made to determine whether a variable which can be applied to the operating element changes in a predetermined manner when the position of the operating element is at a predetermined distance from the reference position.

2. Method according to Claim 1, wherein the variable which can be applied to the operating element is the operating force which is required to adjust the operating element.

3. Method according to Claim 1, wherein the variable which can be applied to the operating element is the speed of the operating element which is present at a constant operating force of the operating element.

4. Method according to one of Claims 1 to 3, wherein the variable which can be applied to the operating element changes in a predetermined manner when a plausibility position is reached, and the variable is ascertained before and/or after the plausibility position is reached when the operating element moves, the ascertained variables being interrelated and the plausibility position only being evaluated when the interrelationship meets predetermined criteria.

5. Apparatus for referencing the position of an operating element of a functional unit, in particular a clutch in the drive train of a vehicle, containing
   an actuator (12; 196) for adjusting an operating element (24; 184),
   an increment sensor (21; 198) which detects a change in the position of the operating element,
   a referencing device (26; 100) which defines a reference position of the operating element,
   a plausibility device (40; 42; 100) which defines a plausibility position which is located at a predetermined distance from the reference position,
   a control unit (38) for controlling the actuator (12; 196), which control unit has a counting device for counting the increments which are detected by the increment sensor (21; 198),
   a reference position detection device for detecting the reference position of the operating element,
   a plausibility position detection device for detecting the plausibility position of the operating element,
   a memory for storing readings from the increment sensor and a setpoint plausibility number of increments between the reference position and the plausibility position, and
   a comparison device for comparing the setpoint plausibility number with an actual plausibility figure which is ascertained together with a referencing operation, wherein a referencing operation is stored as valid only when the actual plausibility figure differs from the setpoint plausibility figure by less than a predetermined value.

6. Apparatus according to Claim 5, wherein the actuator is an electric motor (12).

7. Apparatus according to Claim 5 or 6, wherein the plausibility device is designed in such a way that it varies the force, which is required for adjusting the operating element (24) and which can be applied by the actuator (12), in a predetermined manner in the plausibility position.

8. Apparatus according to one of Claims 5 to 7, wherein the plausibility position detection device detects the power consumption of the actuator (12).

9. Apparatus according to one of Claims 5 to 8, wherein the control unit (38) is designed in such a way that the plausibility of the plausibility position is checked by a variable which is critical for operating the operating element (184) being determined before and/or after the plausibility position is reached, the determined variables being interrelated and the plausibility position being evaluated as being plausible if a predetermined relationship is identified.

10. Apparatus according to one of Claims 5 to 9, wherein the plausibility device contains a scanning module (34) which is guided through a movement path (32) which moves relative to the scanning module when the operating element (24) is adjusted, wherein the force which is required to move the movement path relative to the scanning module changes in a predetermined manner in the plausibility position of the operating part.

11. Apparatus according to Claim 10, wherein the scanning module (34) is elastically prestressed with respect to the movement path (32) and the elastic prestressing force changes when the movement path moves relative to the scanning module.

12. Apparatus according to one of Claims 5 to 9, wherein the actuator (196) operates a linearly moving scanning element (186) which, when it moves along a shaped surface (100) which is formed on a pivotable operating element (184), pivots the operating element, wherein the plausibility device is formed by a sudden change in the inclination of the shaped surface.

13. Apparatus according to one of Claims 5 to 12, wherein the referencing device is formed by a stop (26).

14. Apparatus according to Claim 12, wherein the referencing device is formed by a referencing point of the shaped surface (100), the scanning element coming to rest against the said referencing point when the clutch automatically opens.

## Revendications

1. Procédé de référencement de la position d'un organe d'actionnement d'une unité fonctionnelle et notamment d'un embrayage du train d'entraînement d'un véhicule, dans lequel l'atteinte d'une position de référence de l'organe d'actionnement est rendue plausible en vérifiant si une grandeur qui peut être appliquée sur l'organe d'actionnement se modifie de manière prédéterminée à une distance prédéterminée de la position de l'organe d'actionnement par rapport à la position de référence.

2. Procédé selon la revendication 1, dans lequel la grandeur qui peut être appliquée sur l'organe d'actionnement est la force d'actionnement nécessaire pour déplacer l'organe d'actionnement.

3. Procédé selon la revendication 1, dans lequel la grandeur qui peut être appliquée sur l'organe d'actionnement est la vitesse imprimée à l'organe d'actionnement lorsque la force d'actionnement qui déplace l'organe d'actionnement est constante.

4. Procédé selon l'une des revendications 1 à 3, dans lequel la grandeur qui peut être appliquée sur l'organe d'actionnement se modifie de manière prédéterminée lorsqu'une position plausible est atteinte, la grandeur étant déterminée lors d'un déplacement de l'organe d'actionnement avant et/ou après qu'une position plausible est atteinte, les grandeurs déterminée étant fixées en relation mutuelle et la position plausible n'est vérifiée que lorsque la relation mutuelle satisfait à des critères prédéterminés.

5. Dispositif de référencement de la position d'un organe d'actionnement d'une unité fonctionnelle et notamment d'un embrayage du train d'entraînement d'un véhicule, le dispositif comprenant :

   un actionneur (12; 196) qui déplace un organe d'actionnement (24; 184),
   un détecteur incrémentiel (21; 198) qui saisit une modification de la position de l'organe d'actionnement,
   un système de référencement (26; 100) qui définit une position de référence de l'organe d'actionnement,
   un système de plausibilité (40; 42; 100) qui définit la position plausible située à distance prédéterminée de la position de référence,
   une unité de commande (38) qui commande l'actionneur (12; 196), l'unité de commande présentant un système de comptage qui compte les incréments saisis par le détecteur incrémentiel (21; 198),
   un système de saisie de la position de référence qui saisit la position de référence de l'organe d'actionnement,
   un système de saisie de la position plausible qui saisit la position plausible de l'organe d'actionnement,
   une mémoire qui conserve les états de comptage du détecteur incrémentiel et un nombre plausible de consigne des incréments situés entre la position de référence et la position plausible,
   un système de comparaison qui compare le nombre plausible de consigne à un nombre plausible effectif déterminé en même temps qu'une référence, une référence étant conservée en mémoire comme valide uniquement si le nombre plausible effectif diffère du nombre plausible de consigne de moins qu'une valeur prédéterminée.

6. Dispositif selon la revendication 5, dans lequel l'actionneur est un moteur électrique (12).

7. Dispositif selon les revendications 5 ou 6, dans lequel le système de plausibilité est configuré de telle sorte qu'il modifie de manière prédéterminée la force que l'actionneur (12) doit exercer pour déplacer l'organe d'actionnement (24) jusque dans la position plausible.

8. Dispositif selon l'une des revendications 5 à 7, dans lequel le système de saisie de la position plausible saisit la puissance consommée par l'actionneur (12).

9. Dispositif selon l'une des revendications 5 à 8, dans lequel l'unité de commande (38) est configurée de telle sorte que la position plausible est estimée plausible en déterminant avant et/ou après l'atteinte de la position plausible une grandeur qui détermine l'actionnement de l'organe d'actionnement (184) et en plaçant les grandeurs ainsi définies en relation mutuelle, la position plausible étant évaluée comme plausible lorsque la présence d'une relation prédéterminée est constatée.

10. Dispositif selon l'une des revendications 5 à 9, dans lequel le système de plausibilité contient un composant de palpage (34) guidé sur une piste de déplacement (32) qui se déplace par rapport au composant de palpage lors d'un déplacement de l'orage d'actionnement (24), la force nécessaire pour déplacer la piste de déplacement par rapport au composant de palpage se modifiant de manière prédéterminée lorsque le composant de palpage est dans la position plausible.

11. Dispositif selon la revendication 10, dans lequel le composant de palpage (34) est précontraint élastiquement en direction de la piste de déplacement (32), la force de précontrainte élastique se modifiant lors d'un déplacement de la piste de déplacement par rapport au composant de palpage.

12. Dispositif selon l'une des revendications 5 à 9, dans lequel l'actionneur (196) actionne un organe de palpage (186) qui se déplace linéairement et qui fait pivoter l'organe d'actionnement lors de son déplacement sur une surface (100) formée sur un organe d'actionnement (184) pivotant, le système de plausibilité étant formé par une modification brusque de la surface.

13. Dispositif selon l'une des revendications 5 à 12, dans lequel le système de référencement est formé par une butée (26).

14. Dispositif selon la revendication 12, dans lequel le système de référencement est formé par un emplacement de référence de la surface (100) auquel l'organe de palpage aboutit lorsque l'embrayage s'ouvre de lui-même.

**Fig. 1**

**Fig. 2**

**Fig. 3**

Fig. 4

60 — Referenzieren

62 — Verdrehen von 16

64 — Auswerten Drehgeschwindigkeit

66 — Dreh-geschwindigkeit durchläuft Min

ja

68 — Speichern $Z_{Min}$

70 — Anschlag erreicht

ja

72 — Speichern $Z_A$

74 — $Z_A - Z_{Min} \stackrel{\wedge}{=} a$

ja

76 — $Z_A \stackrel{\wedge}{=}$ Ref.

78 — Ende

## Fig. 5

## Fig. 6

## Fig. 7

## Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1614922 A
- DE 4433825 C2

- DE 10027330 A1